# EUROPEAN PATENT APPLICATION

(11) **EP 4 362 444 A1**
(43) Date of publication of application: **01.05.2024**
(21) Application number: 22828548.2
(22) Date of filing: 24.06.2022
(51) Int. Cl.: H04M 3/56, H04M 11/00, G16Y 20/40, G16Y 40/20, G06Q 10/06, G06Q 10/10

(54) **COMPUTER SYSTEM, METHOD, AND PROGRAM FOR IMPROVING RELATIONS WITH INDIVIDUAL PARTIES IN TWO-PARTY COMMUNICATION**

(30) Priority: 25.06.2021 JP 2021105704
(71) Applicant: KAKEAI, Inc., Tokyo, 107-0052 (JP)
(72) Inventor: HONDA, Hidetaka, Tokyo 107-0061 (JP)
(74) Representative: Uexküll & Stolberg
(86) International application number: PCT/JP2022/025378
(87) International publication number: WO 2022/270632

(57) **Abstract**

This computer system for assisting communication between two parties is configured to: receive information indicating a response that a first party of the two parties expects a second party of the two parties to make in the communication; receive speech and/or video during the communication; derive an advice relating to the communication on the basis of the information and the speech and/or the video; and provide the derived advice during the communication.

## Description

### Technical Field

The present invention relates to a computer system, a method, and a program for supporting communication and, more specifically, to a computer system, a method, and a program for supporting communication between two parties (between a first party and a second party).

### Background Art

In an organization, interviews between subordinates and superiors are often performed. The interviews are performed, for example, for purposes such as objective setting, progress management, and result report of the subordinates. A system for supporting such interviews is known (Patent Literature 1).

Among such interviews, there is an interview called "one-on-one meeting" (or "one-on-one") that a superior and a subordinate perform one-to-one. An object of "one-on-one" is to encourage growth of the subordinate by allowing the subordinate to talk to the superior while taking the initiative.

### Citation List

### Patent Literature

Patent Literature 1: Japanese Laid-Open Publication No. 2006-190162

### Summary of Invention

### Technical Problem

The inventors of the present invention considered that the quality of communication between two parties should be improved if one party of the two parties can encourage the other party to be able to appropriately interact in the communication between the two parties including "one-on-one".

An object of the present invention is to provide a computer system, a method, and a program for supporting communication between two parties in order to improve the quality of the communication between the two parties.

### Solution to Problem

The present invention provides, for example, the following items.

### (Item 1)

A computer system for supporting communication between two parties, the computer system including:
first receiving means for receiving information indicating a response that a first party of the two parties expects a second party of the two parties to make in the communication;
second receiving means for receiving audio and/or video during the communication;
deriving means for deriving advice in the communication based on the information and further based on the audio and/or the video; and
providing means for providing the derived advice during the communication.

### (Item 2)

The computer system described in the item 1, wherein, when the audio and/or the video satisfies at least one standard correlated with the expected response, the deriving means derives the advice correlated with the at least one standard.

### (Item 3)

The computer system described in the item 2, further including changing means for changing the at least one standard based on a result of the communication.

### (Item 4)

The computer system described in item 3, wherein the changing means
(i) changes the at least one standard to relax the at least one standard when advice was not provided during the communication, and
(ii) changes the at least one standard to strengthen the at least one standard when advice was provided during the communication but evaluation for the communication was low.

### (Item 5)

The computer system described in any one of the items 1 to 4, wherein
the second receiving means receives at least the audio, and
the deriving means extracts characteristics of audio of the first party and/or the second party from the audio and derives the advice based on at least the input and the characteristics of the audio.

### (Item 6)

The computer system described in the item 5, wherein the characteristics of the audio of the first party include at least one of pitch of audio at a time when the first party uttered predetermined words, speed of the audio at the time when the first party uttered the predetermined words, volume of the audio at the time when the first party uttered the predetermined words, and a number of times the first party uttered the predetermined words.

### (Item 7)

The computer system described in the item 5 or the item 6, wherein characteristics of the audio of the second party words uttered by the second party.

### (Item 8)

The computer system described in any one of the items 5 to 7, wherein characteristics of the audio of the first party and the second party include a ratio of an utterance time of the first party and an utterance time of the second party.

### (Item 9)

The computer system described in any one of the items 1 to 8, wherein
the second receiving means receives at least the video, and
the deriving means extracts characteristics of movements of the first party and/or the second party from the video and derives the advice based on at least the input and the characteristics of the movements.

### (Item 10)

The computer system described in the item 9, wherein the movements include at least one of a movement of a face, a movement of an arm, and a movement of a head.

### (Item 11)

The computer system described in the item 9, wherein the characteristics of the movements include at least one of size of nodding, speed of the nodding, a frequency of the nodding, wrinkles between eyebrows, and facial expression.

### (Item 12)

The computer system described in any one of the items 1 to 11, wherein the providing means displays the advice on a video displayed to the first party and/or the second party during the communication.

### (Item 13)

The computer system described in any one of the items 1 to 12, wherein
the advice is provided to the second party, and
the advice includes a matter that the second party should take into account in the communication.

### (Item 14)

The computer system described in any one of the items 1 to 13, wherein the first party is a member in an organization and the second party is a superior of the member.

### (Item 15)

A method for supporting communication between two parties, the method including:
receiving input indicating a response that a first party of the two parties expects a second party of the two parties to make in the communication;
receiving audio and/or video during the communication;
deriving advice in the communication based on the input and the audio and/or the video; and
providing the derived advice during the communication.

### (Item 15A)

The method described in the item 15, wherein the method includes the characteristics described in one or a plurality of items among the items described above.

### (Item 16)

A program for supporting communication between two parties, the program being executed in a computer system comprising a processor unit, the program causing the processor unit to perform processing including:
receiving input indicating a response that a first party of the two parties expects a second party of the two parties to make in the communication;
receiving audio and/or video during the communication;
deriving advice in the communication based on the input and the audio and/or the video; and
providing the derived advice during the communication.

### (Item 16A)

The program described in the item 16, wherein the program includes the characteristics described in one or a plurality of items among the items described above.

### (Item 17)

A computer-readable storage medium storing a program for supporting communication between two parties, the program being executed in a computer system comprising a processor unit, the program causing the processor unit to perform processing including:
receiving input indicating a response that a first party of the two parties expects a second party of the two parties to make in the communication;
receiving audio and/or video during the communication;
deriving advice in the communication based on the input and the audio and/or the video; and
providing the derived advice during the communication.

### (Item 17A)

The computer-readable storage medium described in the item 17, wherein the computer-readable storage medium includes the characteristics described in one or a plurality of items among the items described above.

### (Item 18)

A computer system for supporting communication between two parties, a first party of the two parties using a first terminal device, a second party of the two parties using a second terminal device, audio and/or video during the communication being acquired by the first terminal device and/or the second terminal device, the computer system including:
first receiving means for receiving information indicating a response that a first party of the two parties expects a second party of the two parties to make in the communication;
second receiving means for receiving the audio and/or the video acquired by the first terminal device and/or the second terminal device;
deriving means for deriving advice in the communication based on the information and the audio and/or the video, when the audio and/or the video satisfies at least one standard correlated with the expected response, the deriving means deriving the advice correlated with the at least one standard; and
providing means for providing the derived advice to the first party via the first terminal device and/or the second party via the second terminal device during the communication.

### (Item 18A)

The computer system described in the item 18, wherein the computer system includes the characteristics described in one or a plurality of items among the items described above.

### (Item 19)

A method for supporting communication between two parties, a first party of the two parties using a first terminal device, a second party of the two parties using a second terminal device, audio and/or video during the communication being acquired by the first terminal device and/or the second terminal device, the method being executed in a computer system including a processor unit, the method including:
the processor unit receiving information indicating a response that a first party of the two parties expects a second party of the two parties to make in the communication;
the processor unit receiving the audio and/or the video acquired by the first terminal device and/or the second terminal device;
deriving advice in the communication based on the information and the audio and/or the video, the deriving including, when the audio and/or the video satisfies at least one standard correlated with the expected response, deriving the advice correlated with the at least one standard; and
the processor unit providing the derived advice to the first party via the first terminal device and/or the second party via the second terminal device during the communication.

### (Item 19A)

The method described in the item 19, wherein the method includes the characteristics described in one or a plurality of items among the items described above.

### (Item 20)

A program for supporting communication between two parties, a first party of the two parties using a first terminal device, a second party of the two parties using a second terminal device, audio and/or video during the communication being acquired by the first terminal device and/or the second terminal device, the program being executed in a computer system comprising a processor unit, the program causing the processor unit to perform processing including:
receiving information indicating a response that a first party of the two parties expects a second party of the two parties to make in the communication;
receiving the audio and/or the video acquired by the first terminal device and/or the second terminal device;
deriving advice in the communication based on the information and the audio and/or the video, the deriving including, when the audio and/or the video satisfies at least one standard correlated with the expected response, deriving the advice correlated with the at least one standard; and
providing the derived advice to the first party via the first terminal device and/or the second party via the second terminal device during the communication.

### (Item 20A)

The program described in the item 20, wherein the program includes the characteristics described in one or a plurality of items among the items described above.

### Advantageous Effects of Invention

According to the present invention, it is possible to provide a computer system, a method, and a program for supporting communication between two parties. This makes it possible to improve the quality of the communication between the two parties.

### Brief Description of Drawings

[Figure 1A] Figure 1A is a diagram showing an example of a screen displayed on a display unit of an information terminal used by a subordinate.
[Figure 1B] Figure 1B is a diagram showing an example of a screen displayed on the display unit of the information terminal used by the subordinate.
[Figure 1C] Figure 1C is a diagram showing an example of a screen displayed on the display unit of the information terminal used by the subordinate.
[Figure 2] Figure 2 is a diagram showing an example of a screen displayed on a display unit of an information terminal used by a superior.
[Figure 3] Figure 3 is a diagram showing an example of a configuration of a computer system 100 for supporting communication between two parties.
[Figure 4A] Figure 4A is a diagram showing an example of a data configuration of advices that are stored in a database unit 200 and can be provided to support the communication between the two parties.
[Figure 4B] Figure 4B is a diagram showing another example of the data configuration of the advices that are stored in the database unit 200 and can be provided to support the communication between the two parties.
[Figure 5] Figure 5 is a diagram showing an example of a configuration of a terminal device 300.
[Figure 6A] Figure 6A is a diagram showing an example of a configuration of a processor unit 120.
[Figure 6B] Figure 6B is a diagram showing an example of a configuration of a processor unit 120', which is an alternative embodiment of the processor unit 120.
[Figure 7A] Figure 7A is a flowchart showing an example of processing 700 by the computer system 100 for supporting the communication between the two parties.
[Figure 7B] Figure 7B is a flowchart showing an example of processing by deriving means 123 in step S703.
[Figure 8A] Figure 8A is a flowchart showing an example of other processing 800 by the computer system 100 for supporting the communication between the two parties.
[Figure 8B] Figure 8B is a flowchart showing an example of processing by changing means 126 in step S802.

### Description of Embodiment

### 1. Definitions

In this specification, "two parties" refers to any two parties. In an embodiment, "two parties" refers to two parties having some hierarchical relationship. Here, for example, some hierarchical relationship may be a hierarchical relationship in terms of position (for example, a superior-subordinate relationship or a teacher-student relationship) or may be a hierarchical relationship in terms of age (for example, a senior-junior relationship) or a hierarchical relationship based on experience or knowledge (for example, a professional-amateur relationship). Note that the hierarchical relationship based on experience or knowledge can be changed according to experience or knowledge serving as a standard. For example, in the case of two parties A and B, A can be superior to B when A has more knowledge than B in a certain field. B can be superior to A when B has more knowledge than A in another field.

In this specification, "a first party of two parties" refers to one of the any two parties. In the embodiment, "a first party of two parties" refers to a subordinate party of the two parties having some hierarchical relationship. For example, "a first party of two parties" includes a subordinate in the superior-subordinate relationship, a student in the teacher-student relationship, a junior party in the senior-junior relationship, and an amateur in the professional-amateur relationship.

In this specification, "a second party of two parties" refers to the other of the any two parties. In the embodiment, "a second party of two parties" refers to a superior party of the two parties having some hierarchical relationship. For example, "a second party of two parties" includes a superior in the superior-subordinate relationship, a teacher in the teacher-student relationship, a senior party in the senior-junior relationship, and a professional in the professional-amateur relationship.

In this specification, "communication between two parties" refers to communication performed by two parties one-to-one. "Communication between two parties" includes communication in any field such as communication in work, communication in school life, communication in home life, and communication in pastime activities.

An embodiment of the present invention is explained below with reference to the drawings.

### 2. Application for supporting communication between two parties

The inventors of the present invention developed an application for supporting communication between two parties. The application for supporting communication between two parties can improve relations with individual parties in communication between two parties. Two parties who perform communication can improve the quality of the communication by respectively using the application for supporting communication between two parties.

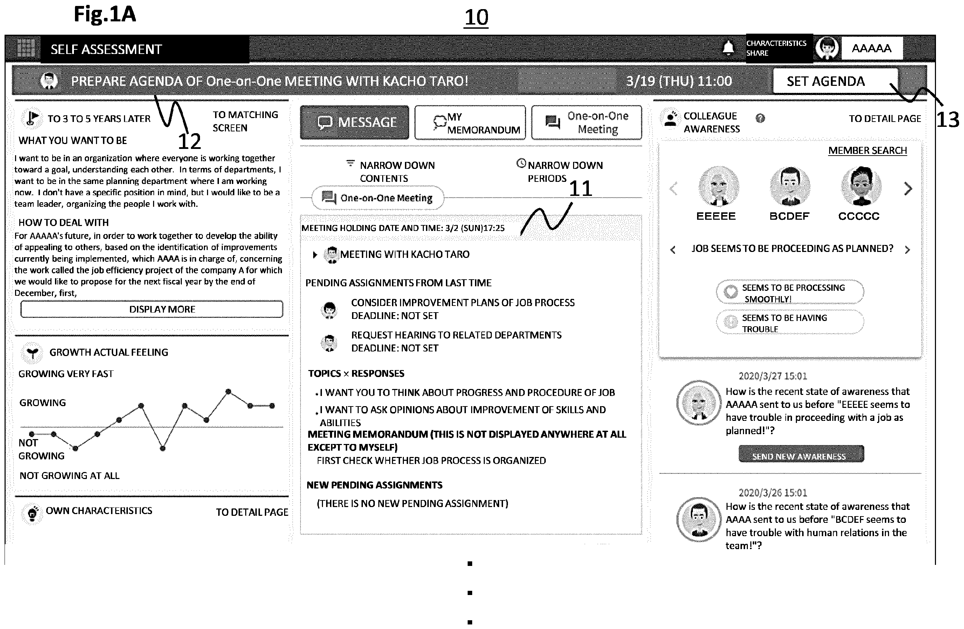

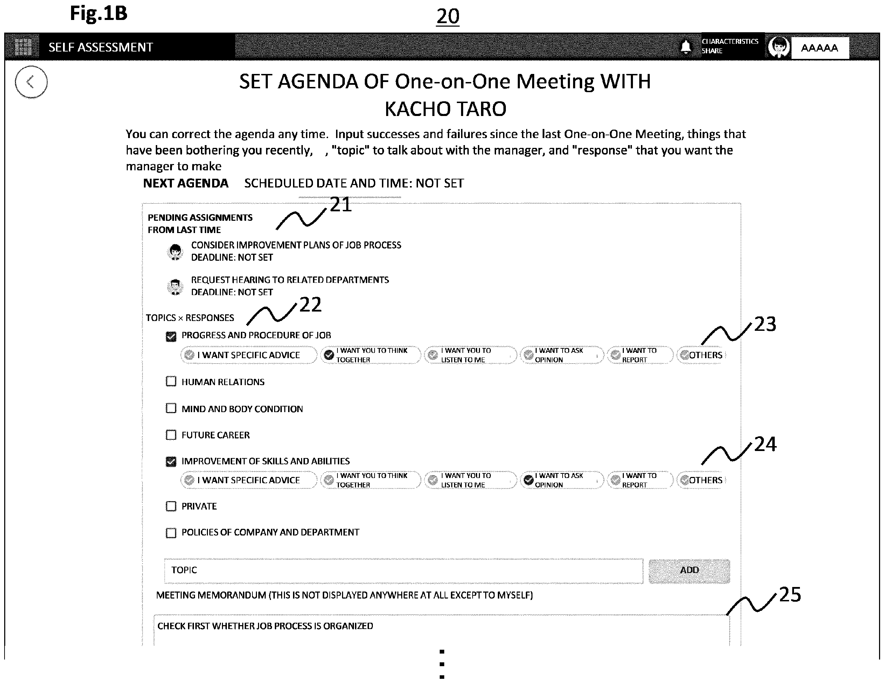

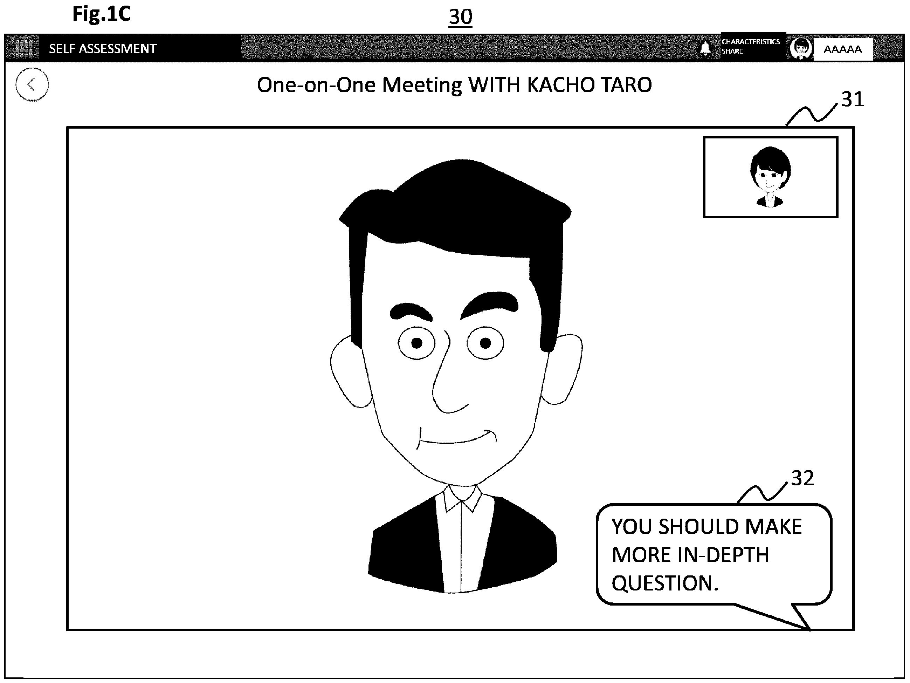

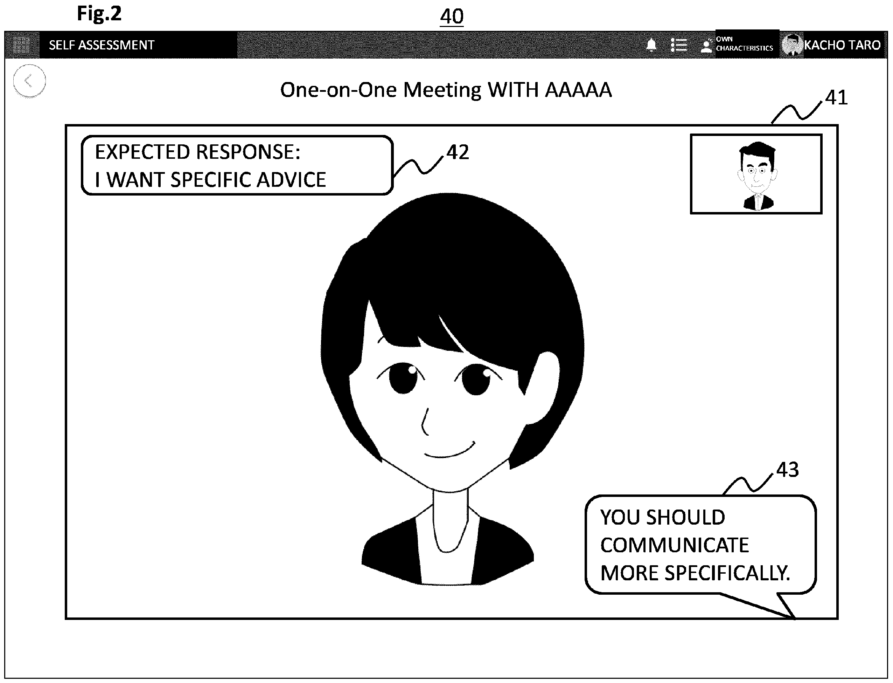

In the following explanation, as an example, two parties are two parties who are a superior and a subordinate, a first party is the subordinate (in Figure 1 and Figure 2, referred to as "AAAAA") and a second party is the superior (in Figure 1 and Figure 2, referred to as "Kacho Taro"), the subordinate and the superior perform a "one-on-one meeting", and the application for supporting communication between two parties supports the one-on-one meeting.

The subordinate and the superior can use the application for supporting the one-on-one meeting using information terminals (for example, smartphones, tablet terminals, or personal computers) in order to perform the one-on-one meeting. The application for supporting the one-on-one meeting may be a Web application usable via a Web browser or may be an application installed in a terminal device. The one-on-one meeting can be performed via video call using the application for supporting the one-on-one meeting.

The application for supporting the one-on-one meeting has a function of managing the one-on-one meeting between the superior and the subordinate. For example, by inputting a schedule of the one-on-one meeting, the superior and the subordinate can receive a reminder of the one-on-one meeting before the schedule. For example, by inputting results in the one-on-one meeting after the one-on-one meeting, the results in the one-on-one meeting are accumulated. Consequently, the superior and the subordinate can refer to results in the past.

Figure 1A to Figure 1C show examples of screens displayed on a display unit of an information terminal used by the subordinate.

Figure 1A shows an example of a screen 10 to which an agenda setting request for the one-on-one meeting has been notified.

On the screen 10, an agenda setting request display section 12 for the one-on-one meeting is displayed above a one-on-one meeting detail display section 11.

Details of a one-on-one meeting to be held next are displayed in the one-on-one meeting detail display section 11. For example, in the one-on-one meeting detail display section 11, a date and time of the next one-on-one meeting, pending assignments from the previous one-on-one meeting, topics desired to be talked about in the next one-on-one meeting and expected responses, a memorandum for the next one-on-one meeting, and the like are displayed. The subordinate can prepare for the next one-on-one meeting by viewing the one-on-one meeting detail display section 11.

An agenda setting request for urging to set an agenda for a one-on-one meeting for which an agenda has not been set yet among the next and subsequent one-on-one meetings is notified to the agenda setting request display section 12. The agenda setting request is notified, for example, any time before a schedule of the next one-on-one meeting. For example, the agenda setting request can be notified one hour before, three hours before, six hours before, twelve hours before, one day before, three days before, or one week before the next one-on-one meeting. In the agenda setting request display section 12, all one-on-one meetings for which agendas have not been set yet may be displayed or a part, for example, closest one, two, three, or more of the one-on-one meetings for which agendas have not been set yet may be displayed. In the example shown in Figure 1A, it is notified to set an agenda for the next one one-on-one meeting (a one-on-one meeting with a superior, Kacho Taro).

The agenda setting request display section 12 includes a "set" button 13. When the "set" button is selected, the screen 10 transitions to a screen 20 shown in Figure 1B.

Figure 1B shows an example of the screen 20 for setting an agenda for the one-on-one meeting. In the example shown in Figure 1B, the screen 20 is a screen for setting an agenda in the one-on-one meeting with the superior, Kacho Taro.

The screen 20 includes a pending assignment display section 21, a topic input section 22, and a memorandum field 25.

Pending assignments from the last time imposed on the subordinate are displayed in the pending assignment display section 21. For example, pending assignments such as "consider an improvement plan for a job process" and "request hearing to related departments" are displayed.

Topics (or themes) desired to be talked about in the one-on-one meeting with the superior Kacho Taro can be input to the topic input section 22. Note that, in this specification, "topic" and "theme" are synonymously used. For example, the topics may be input in a multiple-choice format as shown in Figure 1B or may be input in a free format. Once a topic is input, a response input section 23 for a talk in the topic is displayed. For example, the topic may be a topic concerning a job, may be a topic concerning human relations, or may be a topic concerning the subordinate herself. The topic can be any matter that can be a subject in communication between two parties. For example, in a one-on-one meeting in school life, the topic can be a topic concerning studies, a topic concerning a course, a topic concerning a friend relation, a topic concerning a home, and the like.

A response (or an action and/or an attitude) that the subordinate expects the superior Kacho Taro to make about talks in the topics can be input to the response input section 23. For example, the expected response may be input in a multiple-choice format as shown in Figure 1B or may be input in a free format. The expected response can be, for example, "I want a specific advice", "I want you to think together", "I want you to listen to me", "I want to ask an opinion", and "I want to report" or the like. For example, the expected response may be a specific action or may be a specific attitude.

A memorandum can be freely input to the memorandum field 25. For example, a crib sheet for the subordinate in the one-on-one meeting can be input to the memorandum field 25. The input memorandum can be displayed during the one-on-one meeting. Therefore, the subordinate can work on the one-on-one meeting while viewing the crib sheet.

When the topics and the expected response are input, the agenda setting is completed.

Figure 1C shows an example of a screen 30 displayed during the one-on-one meeting between the superior and the subordinate. The one-on-one meeting between the superior and the subordinate is performed via video call.

The screen 30 includes a video display section 31 and advice display section 32.

A video of the party at the other end of the line during the one-on-one meeting is displayed in the video display section 31. In addition, a video of the subordinate herself during the one-on-one meeting can also be displayed. In this example, a video of the superior Kacho Taro during the one-on-one meeting is displayed and the video of the subordinate herself is also displayed in small size.

Advice to the subordinate in the one-on-one meeting is displayed in the advice display section 32. The advice displayed in the advice display section 32 includes advice message indicating, for example, what kind of matter the subordinate should take into account in the one-on-one meeting currently in progress. For example, the subordinate can personally notice, based on presented information, what kind of matter the subordinate should take into account in the one-on-one meeting currently in progress and can make efforts to improve the quality of the one-on-one meeting currently in progress.

The advice display section 32 is not displayed when advice to the subordinate is unnecessary and can be displayed when it is determined that advice to the subordinate is necessary. The advice display section 32 may be displayed to be overlaid on the video display section 31, that is, displayed on a video displayed in the video display section 31 or may be displayed on the outside of the video display section 31.

In this example, advice message "you should make a more in-depth question." is displayed in the one-on-one meeting currently in progress. The advice message may be a uniform message for respective subordinates or may be an individual advice determined based on characteristics of each of the respective subordinates. Note that the advice is not limited to the advice message or a sentence and may be, for example, a word, a phrase, a clause, or a figure. For example, the figure can be used to advise a motion.

Figure 2 shows an example of a screen displayed on a display unit of the information terminal used by the superior.

Figure 2 shows an example of a screen 40 displayed during the one-on-one meeting between the superior and the subordinate. As explained above, the one-on-one meeting between the superior and the subordinate is performed via the video call.

The screen 40 includes a video display section 41, an expected response display section 42, and advice display section 43.

A video of the party at the other end of the line during the one-on-one meeting is displayed in the video display section 41. In addition, a video of the superior himself during the one-on-one meeting can also be displayed. In this example, a video of the subordinate, AAAAA during the one-one-one meeting is displayed and the video of the superior himself is also displayed in small size.

A response that the subordinate expects in the one-on-one meeting with the superior, Kacho Taro is displayed in the expected response display section 42. The expected response can be a response input to the response input section 23 of the screen 20 shown in Figure 1B. For example, the superior can grasp, from information displayed in the expected response display section 42, what the subordinate requests. Consequently, the superior can take communication with the subordinate in the one-on-one meeting to meet a desire and expectation of the subordinate. This leads to high-quality communication between the two parties.

The expected response display section 42 may be always displayed during the one-on-one meeting or may be temporarily displayed during the one-on-one meeting (for example, when being operated by the superior during a predetermined period in the beginning of the one-on-one meeting or when the advice display section 43 explained below is displayed). The expected response display section 42 may be displayed to be overlaid on the video display section 41, that is, displayed on a video displayed in the video display section 41 or may be displayed in the outside of the video display section 41.

Advice to the superior in the one-on-one meeting is displayed in the advice display section 43. The advice displayed in the advice display section 43 includes advice message indicating, for example, what kind of matter the superior should take into account in the one-on-one meeting currently in progress. For example, the superior can personally notice based on presented information what kind of matter the superior should take into account in the one-on-one meeting currently in progress and can make efforts to improve the quality of the one-on-one meeting currently in progress.

The advice display section 43 is not displayed when advice to the superior is unnecessary and can be displayed when it is determined that advice to the superior is necessary. The advice display section 43 may be displayed to be overlaid on the video display section 41, that is, displayed on a video displayed in the video display section 41 or may be displayed on the outside of the video display section 41.

In this example, advice message "you should communicate more specifically" is displayed in the one-on-one meeting currently in progress. The advice message may be a uniform message to respective superiors or may be an individual advice determined based on characteristics of each of the respective superiors. Note that the advice is not limited to the advice message or a sentence and may be, for example, a word, a phrase, a clause, or a figure. For example, the figure can be used to advise a motion.

After the one-on-one meeting ends, the subordinate can evaluate the one-on-one meeting with the superior, Kacho Taro. The evaluation can be performed, for example, after the screen 30 transitions to an evaluation screen (not shown).

The subordinate can input, for example, an overall evaluation, which is evaluation of the entire one-on-one meeting with the superior, Kacho Taro. For example, the overall evaluation may be a two-grade evaluation for evaluating whether the subordinate is satisfied with the one-on-one meeting or may be a multi-grade evaluation indicating a degree of satisfaction with the one-on-one meeting.

The subordinate can input an individual evaluation to a response by the superior in the one-on-one meeting, for example, in addition to the overall evaluation or instead of the overall evaluation. For example, the individual evaluation may be a two-grade evaluation for evaluating whether an expected response has been performed for talks of topics or whether the subordinate is satisfied by the performed response or may be a multi-grade evaluation indicating a degree of satisfaction with the performed response.

After the one-on-one meeting ends, the superior can evaluate the one-one-one meeting with the subordinate AAAAA. The evaluation can be performed after the screen 40 transitions to an evaluation screen (not shown).

The superior can input, for example, an overall evaluation, which is evaluation of the entire one-on-one meeting with the subordinate AAAAA. The overall evaluation may be a two-grade evaluation for evaluating, for example, whether the one-on-one meeting satisfied by the subordinate has been successfully performed or may be a multi-grade evaluation indicating a degree of the one-on-one meeting satisfied by the subordinate having been successfully performed.

The superior can input an individual evaluation for evaluating whether the superior has successfully met expectation of the subordinate in the one-on-one meeting, for example, in addition to the overall evaluation or instead of the overall evaluation. For example, the individual evaluation may be a two-grade evaluation for evaluating whether an expected response has been successfully performed for talks of topics or may be a multi-grade evaluation indicating a degree of the expected response having been successfully performed.

The information input to the screen 20, the screen 30, and the screen 40 is accumulated in an application for supporting the one-on-one meeting and used for a later one-on-one meeting. The later one-on-one meeting may be a one-on-one meeting between the subordinate "AAAAA" and the superior "Kacho Taro", may be a one-on-one meeting between the subordinate "AAAAA" and another superior, may be a one-on-one meeting between another subordinate and the superior "Kacho Taro", or may be a one-on-one meeting between another subordinate and another superior.

In the example explained above, the one-one-one meeting is performed via the video call. However, communication supported by the present invention is not limited to the one-on-one meeting performed via the video call. The present invention can support communication of any form as long as audio and/or video of at least one of two parties can be acquired in communication between the two parties. Such communication includes, for example, face-to-face communication in a state in which terminal devices are placed at hand.

In the example explained above, the one-on-one meeting between the superior and the subordinate is supported. However, communication supported by the present invention is not limited to the one-on-one meeting between the superior and the subordinate. The present invention can support one-to-one any communication by any two parties as long as a response that one of the two parties expects the other of the two parties to make is set in advance in communication between the two parties. Such communication includes, for example, communication between a manager A (a superior) of a certain company and a manager B (a superior) of another company for A to learning, from B, an effective method of bringing out abilities for a subordinate, communication between a member C (a subordinate) of a certain company and a manager D (a superior) of another company for C to learn, from D, a smooth method of proceeding with a meeting or a method of future career formation, communication between a high school student E and a university student F for E to learn an effective method of entrance exam study, or communication between a certain party G and an expert H or a party I having knowledge and experience for G to learn for upskilling or as a lesson. However, the communication is not limited to these kinds of communication.

The application for supporting communication between two parties explained above may be implemented by, for example, a computer system for supporting communication between two parties explained below. Relations with individual parties in communication between two parties can be improved by the computer system for supporting communication between two parties.

### 3. Configuration of a computer system for supporting communication between two parties

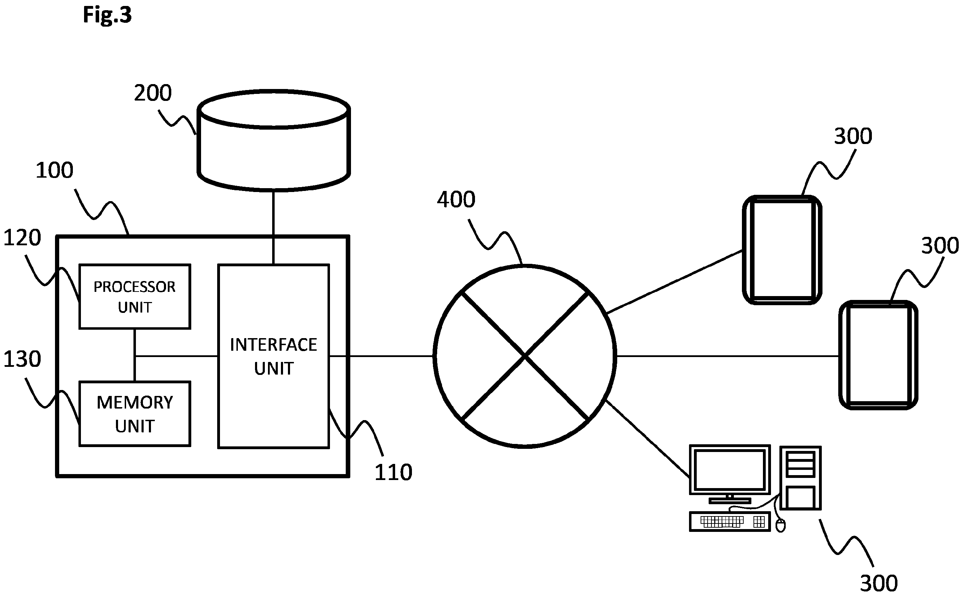

Figure 3 shows an example of a configuration of a computer system 100 for supporting communication between two parties.

The computer system 100 is connected to a database unit 200. The computer system 100 is connected to at least one terminal device 300 via a network 400.

Note that, in Figure 3, three terminal devices 300 are shown. However, the number of terminal devices 300 is not limited to this. Any number of terminal devices 300 can be connected to the system 100 via the network 400.

The network 400 can be a network of any type. For example, the network 400 may be the Internet or may be a LAN. The network 400 may be a wired network or may be a wireless network.

The computer system 100 can be a computer (for example, a server device) installed in a service provider that provides an application for supporting the communication between the two parties. The terminal devices 300 can be computers (for example, terminal devices) used by the two parties in the communication between the two parties. For example, in the example explained above, one of the terminal devices 300 can be a computer used by the superior and another one of the terminal devices 300 can be a computer used by the subordinate. Here, the computer (the server device or the terminal device) can be a computer of any type. For example, the terminal device can be a terminal device of any type such as a smartphone, a tablet terminal, a personal computer, a smart glass, or a smart watch.

The computer system 100 includes an interface unit 110, a processor unit 120, and a memory unit 130. The computer system 100 is connected to the database unit 200.

The interface unit 110 performs exchange of information with the outside of the computer system 100. The processor unit 120 of the computer system 100 is capable of receiving information from the outside of the computer system 100 via the interface unit 110 and capable of transmitting information to the outside of the computer system 100 via the interface unit 110. The interface unit 110 can perform exchange of information in any format. An information terminal used by the first party and an information terminal used by the second party can communicate with the computer system 100 via the interface unit 110.

The interface unit 110 includes, for example, an input unit that makes it possible to input information to the computer system 100. It does not matter in what kind of form the input unit makes it possible to input information to the computer system 100. For example, when the input unit is a receiver, the receiver may receive information from the outside of the computer system 100 via a network to thereby input the information. In this case, a type of the network does not matter. For example, the receiver may receive information via the Internet or may receive information via a LAN.

The interface unit 110 includes, for example, an output unit that makes it possible to output information from the computer system 100. It does not matter in what kind of form the output unit outputs information from the computer system 100. For example, when the output unit is a transmitter, the transmitter may transmit information to the outside of the computer system 100 via a network to thereby output the information. In this case, a type of the network does not matter. For example, the transmitter may transmit information via the Internet or may transmit information via a LAN.

The processor unit 120 executes processing of the computer system 100 and controls an operation of the entire computer system 100. The processor unit 120 reads out a program stored in the memory unit 130 and executes the program. This makes it possible to cause the computer system 100 to function as a system that executes desired steps. The processor unit 120 may be implemented by a single processor or may be implemented by a plurality of processors.

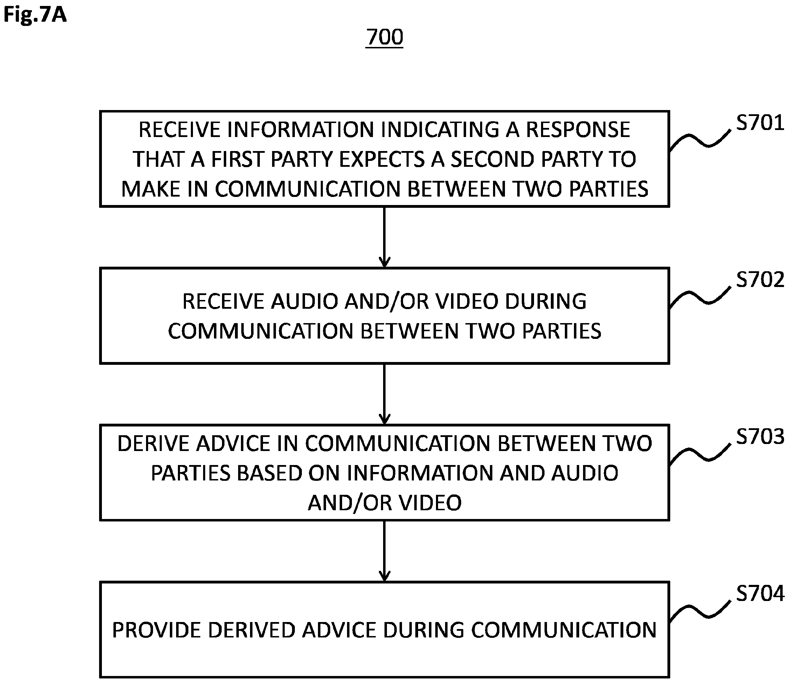

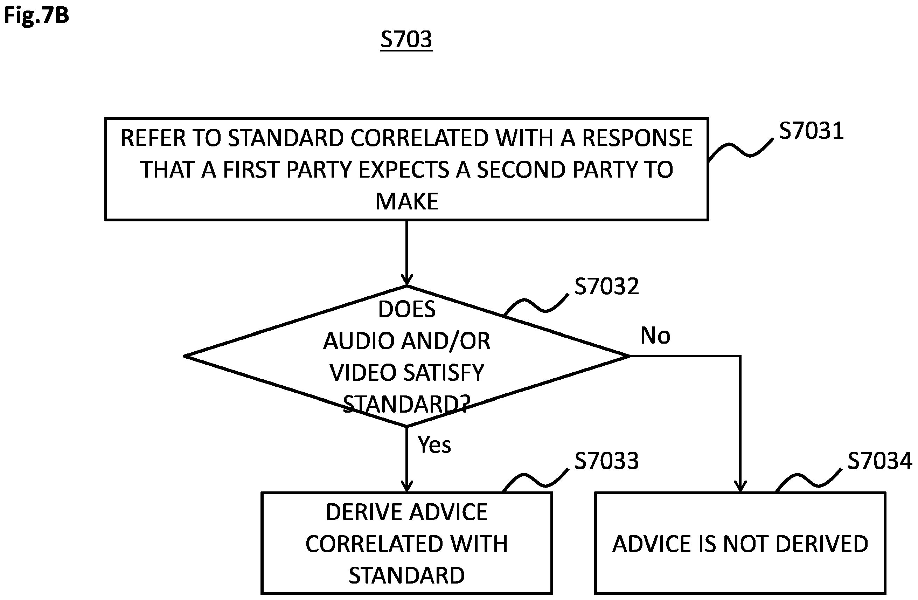

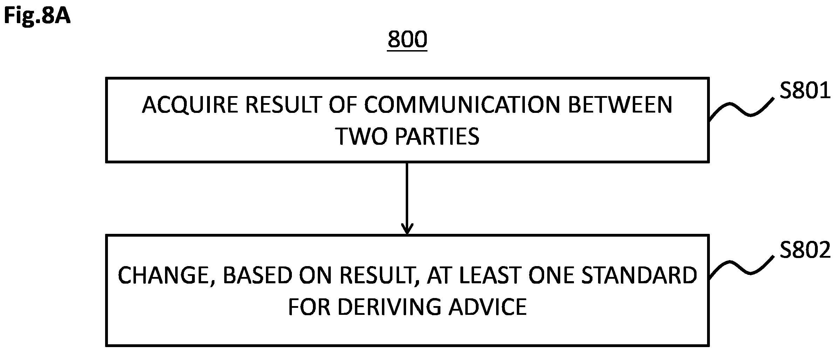

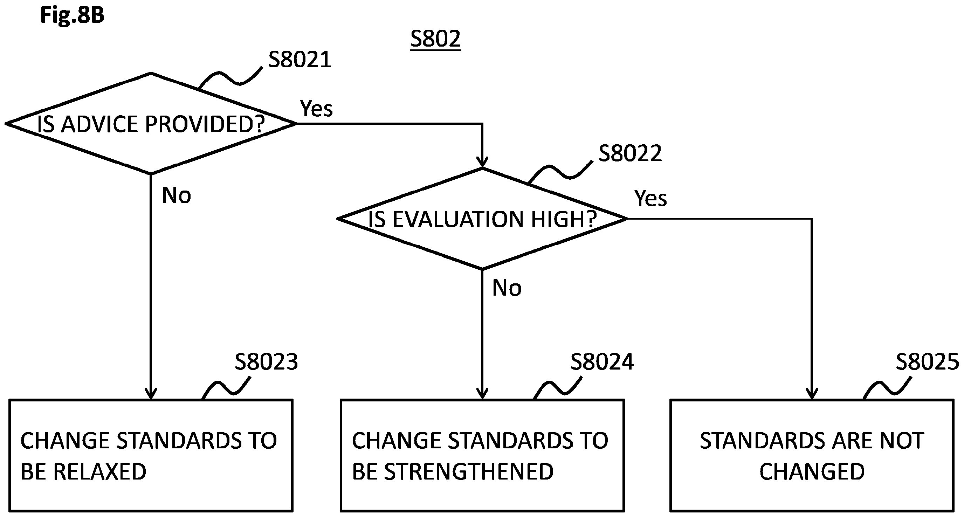

The memory unit 130 stores a program required to execute the processing of the computer system 100, data required for the execution of the program, and the like. The memory unit 130 may store a program for causing the processor unit 120 to perform processing for supporting the communication between the two parties (for example, a program for implementing processing shown in Figure 7 and Figure 8 explained below). Here, it does not matter how the program is stored in the memory unit 130. For example, the program may be preinstalled in the memory unit 130. Alternatively, the program may be installed in the memory unit 130 by being downloaded through a network. In this case, a type of the network does not matter. The memory unit 130 can be implemented by any storage means. Alternatively, the program may be stored in a computer-readable storage medium and installed in the memory unit 130 by reading the computer-readable storage medium.

Various kinds of information that can be used to support the communication between the two parties are stored in the database unit 200.

Advices that can be provided to support the communication between the two parties are stored in the database unit 200. The advices that can be provided can be stored in correlation with, for example, responses expected in the communication between the two parties and characteristics extracted from audio and/or characteristics extracted from video that can be acquired in the communication between the two parties. In the embodiment, the advices that can be provided can be stored in correlation with standards corresponding to responses expected in the communication between the two parties. The standards can be standards concerning the characteristics extracted from the audio and/or the characteristics extracted from the video.

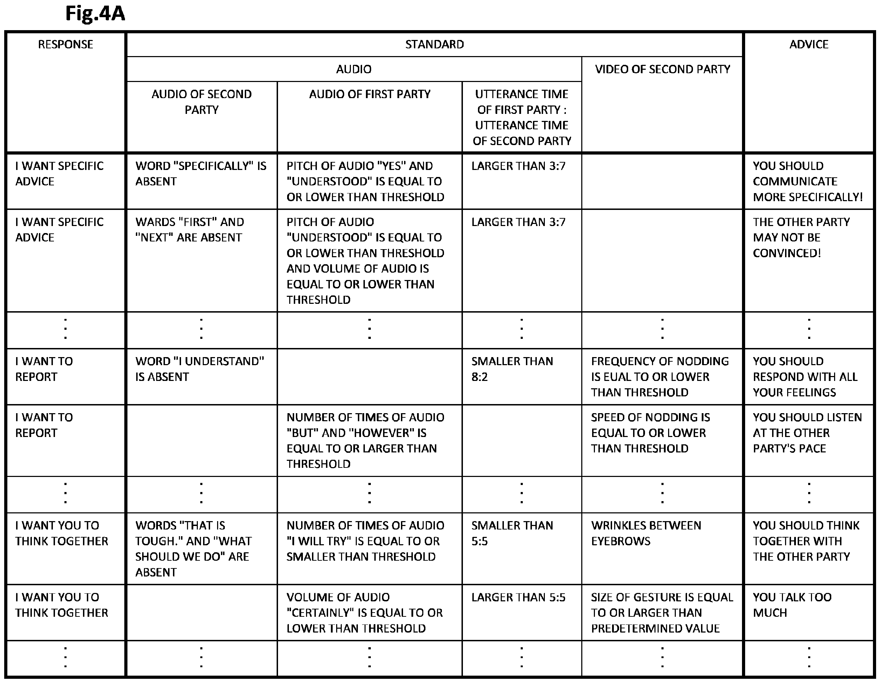

Figure 4A shows an example of a data configuration of the advices that can be provided to support the communication between the two parties stored in the database unit 200. In the example shown in Figure 4A, advices for the second party are shown.

The advices that can be provided to support the communication between the two parties are stored in correlation with responses that the second party expects the first party to make in the communication between the two parties and standards. The standards are standards concerning the characteristics extracted from the audio and/or the characteristics extracted from the video acquired in the communication between the two parties. The standards are correlated with the respective responses. The standards are different for each of the responses.

The standards concerning the characteristics extracted from the audio include a standard concerning characteristics extracted from audio of the first party, a standard concerning characteristics extracted from audio of the second party, and a standard concerning an utterance time of the first party and an utterance time of the second party.

The standard concerning the characteristics extracted from the audio of the first party concerns excess and deficiency of specific words in the audio of the first party. This standard may be considered satisfied, for example, when the specific words are not included in the audio of the first party in a predetermined period during the communication between the two parties. This standard may be considered satisfied, for example, when the specific words are included, less than a predetermined number of times, in the audio of the first party in the predetermined period during the communication between the two parties. This standard may be considered satisfied, for example, when the specific words are included, more than the predetermined number of times, in the audio of the first party in the predetermined period during the communication between the two parties. The predetermined period can be any period such as five minutes from start, ten minutes from start, thirty minutes after the start, or ten minutes after elapse of five minutes from start of the communication between the two parties. The predetermined number of times can be any number of times such as two times, three times, five times, or ten times.

The specific words include words such as "specifically", "first", "next", "I understand", "that is tough", "what should I do", and "do you have any idea?" but are not limited to these. Any words can be set as the specific words.

The standard concerning the characteristics extracted from the audio of the second party concerns, for example, pitch, speed, volume, and/or the number of times of speech of the specific word in the audio of the second party. This standard may be considered satisfied, for example, when pitch of speech of the specific words included in speech of the second party in a predetermined time during the communication between the two parties is equal to or higher or equal to or lower than predetermined pitch (Hz). This standard may be considered satisfied, for example, when speed of the speech of the specific words included in the audio of the second party in the predetermined period during the communication between the two parties is equal to or higher or equal to or lower than predetermined speed (seconds in which the entire predetermined words are uttered). This standard may be considered satisfied, for example, when volume of the audio of the specific words included in the audio of the second party in the predetermined period during the communication between the two parties is equal to or higher or equal to or lower than predetermined volume (dB). This standard may be considered satisfied, for example, when the number of times of the specific words included in the audio of the second party in the predetermined period during the communication between the two parties is equal to or larger than or equal to or smaller than a predetermined number of times. The predetermined period can be any period such as five minutes from start, ten minutes from start, thirty minutes after the start, or ten minutes after elapse of five minutes from start of the communication between the two parties.

Preferably, the standard concerning the characteristics extracted from the audio of the second party concerns the pitch of the audio of the specific words in the audio of the second party. Feeling of a speaker tends to easily appear in pitch of audio. Feeling of the second party can be accurately estimated by using the pitch of the audio as the standard, leading to improvement of accuracy of advices. In another preferred example, the standard concerning the characteristics extracted from the audio of the second party concerns, for example, the pitch and the speed of audio of the specific words in the audio of the second party. In another preferred example, the standard concerning the characteristics extracted from the audio of the second party concerns the pitch, the speed, and the volume of the audio of the specific words in the audio of the second party. In another preferred example, the standard concerning the characteristics extracted from the audio of the second party concerns the pitch, the speed, the volume, and the number of times of the audio of the specific words in the audio of the second party. Feeling of a speaker most easily appear in pitch of audio. The feeling of the speaker more easily appear in speed, volume, and the number of times in this order. By using these as the standards, feeling of the second party can be more accurately estimated, leading to further improvement of accuracy of advices.

The specific words include words such as "yes", "understood", "but", "however", "I will try", and "certainly" but is not limited to these. Any words can be set as the specific words.

The standard concerning the utterance time of the first party and the utterance time of the second party concerns, for example, a ratio of the utterance time of the first party and the utterance time of the second party. This standard may be considered satisfied, for example, when a ratio of the utterance time of the first party and the utterance time of the second party in a predetermined period during the communication between the two parties is equal to or higher than or equal to or lower than a predetermined ratio. The predetermined period can be any period such as five minutes from start, ten minutes from start, thirty minutes after the start, or ten minutes after elapse of five minutes from start of the communication between the two parties.

The standards concerning the characteristics extracted from the video include a standard concerning characteristics extracted from video of the second party. Note that the standard concerning the characteristics extracted from the video may include a standard concerning characteristics extracted from video of the first party in addition to or instead of the standard concerning the characteristics extracted from the video of the second party.

The standard concerning the characteristics extracted from the video of the second party concerns, for example, presence or absence, size, speed, and a frequency of a movement of the second party. This standard may be considered satisfied, for example, when a movement of a face (for example, a change in facial expression or wrinkles between eyebrows) is included or not included in video of the second party in a predetermined period during the communication between the two parties. This standard may be considered satisfied, for example, when the size of the movement included in the video of the second party in the predetermined period during the communication between the two parties is equal to or larger than or equal to or smaller than predetermined size (a motion distance). This standard may be considered satisfied, for example, when the speed of the movement included in the video of the second party in the predetermined period during the communication between the two parties is equal to or higher than or equal to or lower than predetermined speed (motion speed). This standard may be considered satisfied, for example, when the frequency of the movement included in the video of the second party in the predetermined period during the communication between the two parties is equal to or higher than or equal to or lower than a predetermined frequency (the number of times per predetermined period). The predetermined period can be any period such as five minutes from start, ten minutes from start, thirty minutes after the start, or ten minutes after elapse of five minutes from start of the communication between the two parties.

The movement of the second party includes, for example, a movement of a face, a movement of an arm, and a movement of a head but is not limited to these. The movement of the second party can be any movement that can be extracted from video in the communication between the two parties. More specifically, the movement of the second party can be nodding.

For example, in the example shown in Figure 4A, an expected response "I want a specific advice" is stored in correlation with a standard concerning the characteristics extracted from the audio of the first party "a word 'specifically' is absent", a standard concerning the characteristics extracted from the audio of the second party "speed of audio 'yes' and 'understood' is equal to or lower than a threshold and volume of the audio is equal to or lower than a threshold", a standard concerning the utterance time of the first party and the utterance time of the second party "an utterance time of the first party : an utterance time of the second party is larger than 3:7", and advice "you should communicate more specifically!". For example, an expected response "I want you to think together" is stored in correlation with a standard concerning the characteristics extracted from the audio of the second party "volume of audio 'certainly' is equal to or lower than a threshold", a standard concerning the utterance time of the first party and the utterance time of the second party "an utterance time of the first party : an utterance time of the second party is larger than 5:5", a standard concerning the video of the second party "size of a gesture is equal to or larger than a predetermined value", and advice "you talk too much".

As explained above, the response can be stored in correlation with at least one of the standard concerning the characteristics extracted from the audio of the first party, the standard concerning the characteristics extracted from the audio of the second party, the standard concerning the utterance time of the first party and the utterance time of the second party, and the standard concerning the video of the second party and the advice. Consequently, when a certain response is designated, advice correlated with the response can be derived when a standard correlated with the response is satisfied.

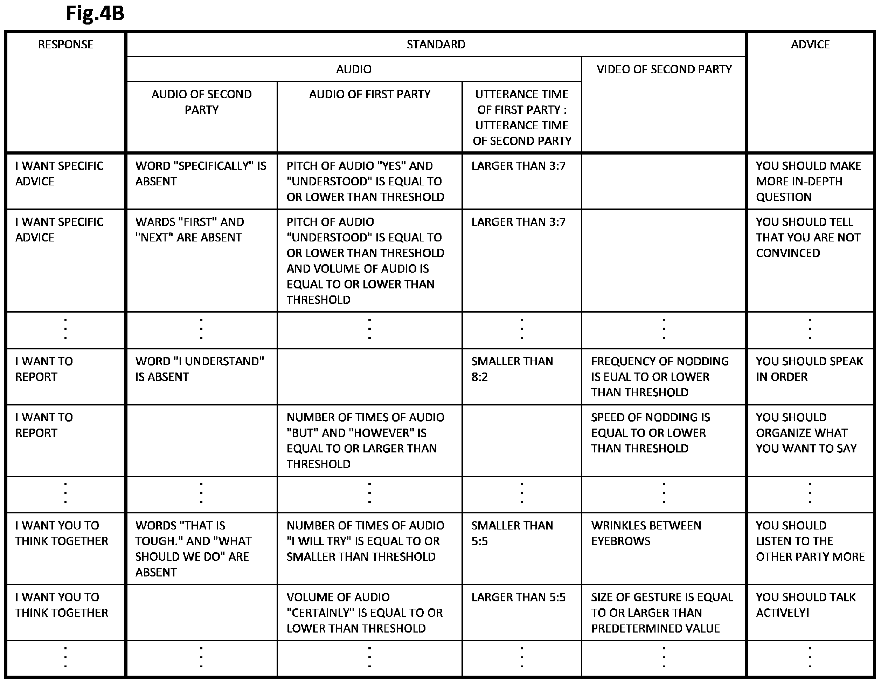

Figure 4B shows another example of the data configuration of the advices that are stored in the database unit 200 and can be provided to support the communication between the two parties. In the example shown in Figure 4B, advices to the first party are shown.

The advices shown in Figure 4B are stored in the database unit 200 in the same form as the form of the advices shown in Figure 4A. The advices to the first party shown in Figure 4B can be advices paired with the advices to the second party shown in Figure 4A.

The advices stored in the database unit 200 may be stored in correlation with, for example, attributes of an organization. For example, advices for companies stored in the database unit 200 can be divided into advices for organizations of the primary industry, advices for organizations of the secondary industry, and advices for organizations of the tertiary industry and stored. For example, advices for students stored in the database unit 200 can be divided into advices for elementary school student organizations, advices for junior high school student organizations, advices for high school student organizations, and advices for university student organizations and stored. Consequently, it is possible to provide different advices for each of organizations having different attributes.

In the present invention, timing for storing advices in the database unit 200 does not matter. The advices, for example, may be stored in advance in the database unit 200 by a service provider that provides a service for supporting communication between two parties. Alternatively, the advices may be input and stored by a user equivalent to the second party, for example, while the service is operated using the computer system 100.

In the present invention, the standards correlated with the advices may be fixed standards or may be standards to be changed. Preferably, the standards correlated with the advices can be changed based on evaluation from one or both of the two parties for the communication between the two parties to whom the advices are provided. The standards correlated with the advices can be change by, for example, processing explained below with reference to Figure 8A and Figure 8B.

In the example shown in Figure 3, the database unit 200 is provided on the outside of the computer system 100. However, the present invention is not limited to this. The database unit 200 can also be provided on the inside of the computer system 100. At this time, the database unit 200 may be implemented by the same storage means as the storage means that implements the memory unit 130 or may be implemented by storage means different from the storage means that implements the memory unit 130. In any case, the database unit 200 is configured as a storage unit for the computer system 100. A configuration of the database unit 200 is not limited to a specific hardware configuration. For example, the database unit 200 may be configured by a single hardware component or may be configured by a plurality of hardware components. For example, the database unit 200 may be configured as a hard disk device externally attached to the computer system 100 or may be configured as a storage on the Cloud connected via a network.

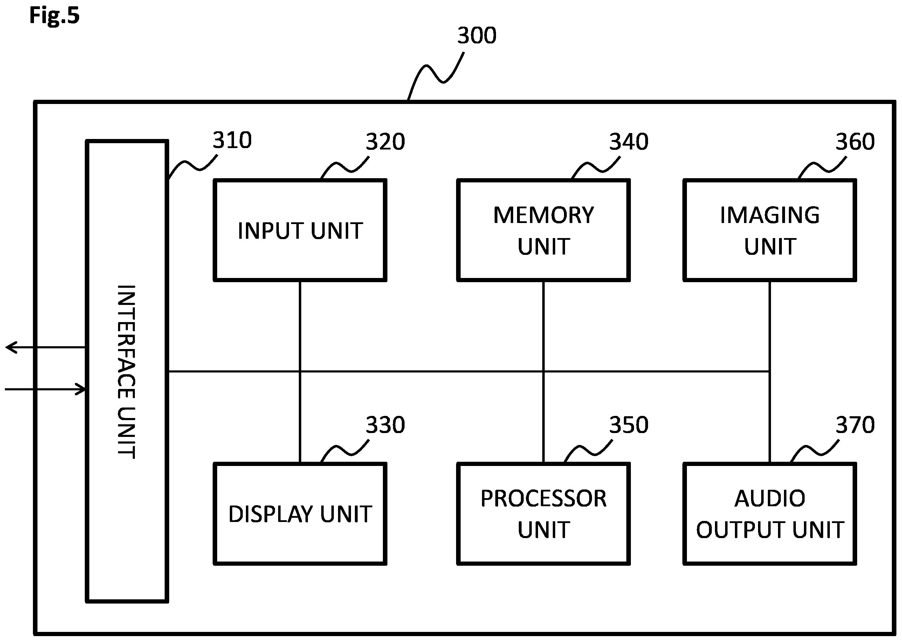

Figure 5 shows an example of a configuration of the terminal device 300.

The terminal device 300 includes an interface unit 310, an input unit 320, a display unit 330, a memory unit 340, a processor unit 350, an imaging unit 360, and a audio output unit 370.

The interface unit 310 controls communication performed via the network 400. The processor unit 350 of the terminal device 300 is capable of receiving information from the outside of the terminal device 300 and capable of transmitting information to the outside of the terminal device 300 via the interface unit 310. The interface unit 310 can control the communication with any method.

The input unit 320 enables the user to input information to the terminal device 300. It does not matter in what kind of form the input unit 320 enables the user to input information to the terminal device 300. For example, when the input unit 320 is a touch panel, the user may input information by touching the touch panel. Alternatively, when the input unit 320 is a mouse, the user may input information by operating the mouse. Alternatively, when the input unit 320 is a keyboard, the user may input information by pressing keys of the keyboard. Alternatively, when the input unit is a microphone, the user may input information by inputting audio to the microphone. Alternatively, when the input unit is a data reading device, the user may input information by reading the information from a storage medium connected to the computer system 100.

The display unit 330 can be any display for displaying information. For example, the screens shown in Figure 1 and Figure 2 are displayed on the display unit 330.

A program for executing processing in the terminal device 300, data required for the execution of the program, and the like are stored in the memory unit 340. For example, an application for supporting communication between two parties is stored in the memory unit 340. An application for implementing any function may be stored in the memory unit 340. Here, it does not matter how the program is stored in the memory unit 340. For example, the program may be preinstalled in the memory unit 340. Alternatively, the program may be installed in the memory unit 340 by being downloaded through the network 400. The memory unit 340 can be implemented by any storage means.

The processor unit 350 controls an operation of the entire terminal device 300. The processor unit 350 reads out a program stored in the memory unit 340 and executes the program. This makes it possible to cause the terminal device 300 to function as a device that executes desired steps. The processor unit 350 may be implemented by a single processor or may be implemented by a plurality of processors.

The imaging unit 360 is any means capable of imaging a still image or a moving image. The imaging unit 360 is, for example, a camera. The camera may be a camera built in the terminal device 300 or may be an external camera attached to the terminal device 300.

The audio output unit 370 is any means for outputting audio. The audio output unit 370 is, for example, a speaker.

In the example shown in Figure 4A, the components of the terminal device 300 are provided in the terminal device 300. However, the present invention is not limited to this. Any ones of the components of the terminal device 300 can also be provided on the outside of the terminal device 300. For example, when the input unit 320, the display unit 330, the memory unit 340, the processor unit 350, the imaging unit 360, and the audio output unit 370 are respectively configured by separate hardware components, the hardware components may be connected via any network. At this time, a type of the network does not matter. For example, the hardware components may be connected via a LAN, may be connected by radio, or may be connected by wire. The terminal device 300 is not limited to a specific hardware configuration. For example, the processor unit 350 being configured by an analog circuit rather than a digital circuit is also within the scope of the present invention. The configuration of the terminal device 300 is not limited to the configuration explained above as long as the functions of the terminal device 300 can be implemented.

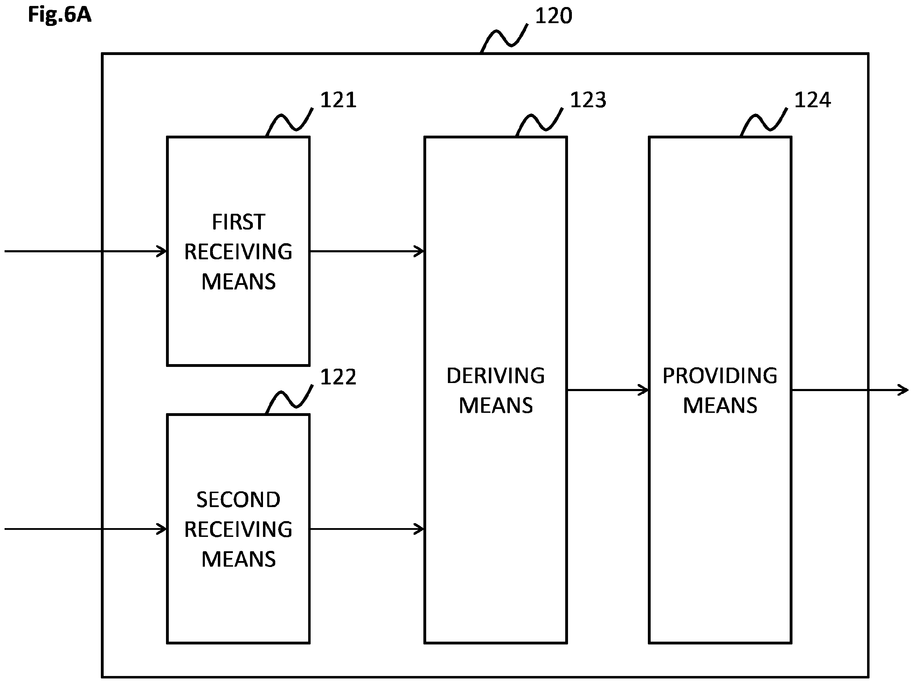

Figure 6A shows an example of a configuration of the processor unit 120.

The processor unit 120 includes first receiving means 121, second receiving means 122, deriving means 123, and providing means 124.

The first receiving means 121 is configured to receive information indicating a response that the first party expects the second party to make in communication between two parties. The first receiving means 121 can receive information from the outside of the computer system 100, for example, via the interface unit 110.

The response that the first party expects the second party to make in the communication between the two parties can be input to the terminal device 300 used by the first party via the input unit 320 (for example, the keyboard or the touch panel). The input information can be input from the terminal device 300 to the computer system 100 via the interface unit 110. For example, when the first party inputs an expected response to the response input section 23 of the screen 20 shown in Figure 1B before the communication between the two parties with the second party, information indicating the input expected response is input to the computer system 100 via the interface unit 110. The first receiving means 121 receives the information from the interface unit 110.

The second receiving means 122 is configured to receive audio and/or video during the communication between the two parties. The second receiving means 122 can receive audio and/or video during the communication between the two parties from the outside of the computer system 100, for example, via the interface unit 110.

The audio and/or the video during the communication between the two parties may be audio and/or video of the first party, may be audio and/or video of the second party, or may be both of the audio and/or the video of the first party and the audio and/or the video of the second party. Preferably, the second receiving means 122 can receive the audio and/or the video of the first party and the audio and/or the video of the second party.

The audio of the first party can be input to the terminal device 300 used by the first party via the input unit 320 (for example, the microphone). The input audio can be input from the terminal device 300 to the computer system 100 via the interface unit 110. The video of the first party can be input to the terminal device 300 used by the first party via the imaging unit 360 (for example, the camera). The input video can be input from the terminal device 300 to the computer system 100 via the interface unit 110.

The audio of the second party can be input to the terminal device 300 used by the second party via the input unit 320 (for example, the microphone). The input audio can be input from the terminal device 300 to the computer system 100 via the interface unit 110. The video of the second party can be input to the terminal device 300 used by the second party via the imaging unit 360 (for example, the camera). The input video can be input from the terminal device 300 to the computer system 100 via the interface unit 110.

The deriving means 123 is configured to derive advice in the communication between the two parties based on the information received by the first receiving means 121 and the audio and/or the video received by the second receiving means 122. The deriving means 123 can derive, for example, among the advices stored in the database unit 200, advice correlated with both of the expected response indicated by the received information and the audio and/or the video. More specifically, when the audio and/or the video satisfies a standard correlated with the expected response indicated by the received information, the deriving means 123 can derive advice correlated with the response and the standard. For example, when the audio and/or the video does not satisfy the standard, the deriving means 123 can be prevented from deriving advice. The standard can be stored in the database unit 200 in correlation with the response and the advice.

The deriving means 123 can extract, for example, from the audio received by the second receiving means 122, characteristics of audio of the first party and/or characteristics of audio of the second party and compare the extracted characteristics of the audio with a standard. The characteristics of the audio of the first party include at least one of pitch of audio at the time when the first party uttered predetermined words, speed of the audio at the time when the first party uttered the predetermined words, volume of the audio at the time when the first party uttered the predetermined words, and the number of times the first party uttered the predetermined words. The deriving means 123 can identify the audio of the predetermined words using means publicly known or to be publicly known in future in the field of audio recognition and measure pitch, speed, volume, and the number of times of the identified audio.

The characteristics of the audio of the second party can be predetermined words uttered by the second party. The deriving means 123 can identify audio of the predetermined words using means publicly known or to be publicly known in future in the field of audio recognition and determine whether the predetermined words are present or measure the number of times the predetermined words appear.

The characteristics of the audio of the first party and the characteristics of the audio of the second party can be an utterance time of the first party and an utterance time of the second party. The deriving means 123 can identify the audio of the first party and the audio of the second party using means publicly known or to be publicly known in future in the field of audio recognition and measure the utterance time of the first party and the utterance time of the second party.

The deriving means 123 can extract, for example, from the video received by the second receiving means 122, characteristics of a movement of the first party and/or characteristics of a movement of the second party and compare the extracted characteristics of the movement with a standard. The movement includes at least one of a movement of a face (for example, a change in facial expression or wrinkles between eyebrows), a movement of an arm, and a movement of a head (for example, nodding). The characteristics of the movement include at least one of presence or absence, size, speed, and a frequency of these movements. The deriving means 123 can identify a predetermined movement using means publicly known or to be publicly known in future in the field of movement recognition and determine presence or absence of the identified movement or can measure size, speed, and a frequency of the identified movement.

For example, a case in which the advices are stored in the database unit 200 in correlation with the responses and the standards as shown in Figure 4A is explained as an example. When information received by the first receiving means 121 indicates "I want a specific advice" is an expected response, the deriving means 123 identifies words "specifically", "first", and "next" from audio of the first party received by the second receiving means 122 and determines presence or absence of the word "specifically" and presence or absence of the words "first" and "next". Further, the deriving means 123 measures pitch of audio of a word "yes" and pitch and volume of audio of a word "understood" from the audio received by the second receiving means 122 and determines whether the pitch of the volume of the word "yes" is equal to or lower than a threshold (for example, 320 Hz) and whether the pitch of the audio of the word "understood" is equal to or lower than a threshold (for example, 300 Hz) and the volume of the audio is equal to or lower than a threshold (for example, 60 dB). Further, the deriving means 123 measures an utterance time of the first party and an utterance time of the second party from the audio received by the second receiving means 122 and determines whether a ratio of the utterance time of the first party and the utterance time of the second party is larger than 3:7. The deriving means 123 may derive advice when at least a part of standards correlated with the advice is satisfied or may derive advice when all of standards correlated with the advice are satisfied.

For example, standards (1) the word "specifically" is absent, (2) the pitch of the audio of the word "yes" is equal to or lower than the threshold and the pitch of the audio of the word "understood" is equal to or lower than the threshold, and (3) the ratio of the utterance time of the first party and the utterance time of the second party is larger than 3:7 are correlated with the advice "you should communicate more specifically!". For example, the deriving means 123 may derive the advice "you should communicate more specifically!" when at least one of (1) to (3) is satisfied. The deriving means 123 may derive the advice "you should communicate more specifically!" when all of (1) to (3) are satisfied.

For example, the standards (1) the words "first" and "next" are absent, (2) the pitch of the audio of the word "understood" is equal to or lower than the threshold and the volume of the audio of the word "understood" is equal to or lower than the threshold, and (3) the ratio of the utterance time of the first party and the utterance time of the second party is larger than 3:7 are correlated with advice "the other party may not be convinced!". Therefore, the deriving means 123 may derive the advice "the other party may not be convinced!" when at least one of (1) to (3) is satisfied. The deriving means 123 may derive the advice "the other party may not be convinced!" when all of (1) to (3) are satisfied.

When standards correlated with a plurality of advices are satisfied, the deriving means 123 may derive all of the plurality of advices or may derive a part of the plurality of advices.

As explained above, the deriving means 123 can determine whether the audio and/or the video satisfies the standard correlated with the response and derive the advice corresponding to the standard when the standard is satisfied.

The providing means 124 is configured to provide, during the communication between the two parties, the advice derived by the deriving means 123. The providing means 124 may provide advice to the first party, may provide advice to the second party, or may provide advices to both of the first party and the second party. For example, when the advice derived by the deriving means 123 is advice for the first party, the providing means 124 can provide the advice to the first party. For example, when the advice derived by the deriving means 123 is advice for the second party, the providing means 124 can provide the advice to the second party. The providing means 124 can provide the advice via the interface unit 110. Here, it does not matter how the providing means 124 provides the advice. For example, the providing means 124 can transmit the advice to the terminal device 300 used by the first party via the interface unit 110 and display the advice on the display unit 330 of the terminal device 300. For example, as shown in Figure 1C, the advice is displayed on a video of the screen 30. For example, the providing means 124 can transmit the advice to the terminal device 300 used by the second party via the interface unit 110 and display the advice on the display unit 330 of the terminal device 300. For example, as shown in Figure 2, the advice is displayed on a video of the screen 40.

When the providing means 124 provides the advices to both of the first party and the second party, the provided advices are preferably advices to be paired.

For example, the first party can learn, from the provided advice, for example, what the first party should do to ask the second party to make an expected response and what the first party should take into account to ask the second party to make the expected response and can take an action or an attitude for asking the second party to make the expected response. Consequently, the quality of the communication between the two parties can be improved.

For example, the second party can learn, from the provided advice, for example, what the second party should do to meet the response expected by the first party or allow the first party to satisfy and what the second party should take into account to meet the response expected by the first party or allow the first party to satisfy and can take an action or an attitude for meeting the response expected by the first party or allow the first party to satisfy. Consequently, the quality of the communication between the two parties can be improved.

Since these advices are based on the audio and/or the video obtained during the communication, that is, the closest audio and/or video, the accuracy of the advices is high and the quality of the communication between the two parties can be effectively improved.

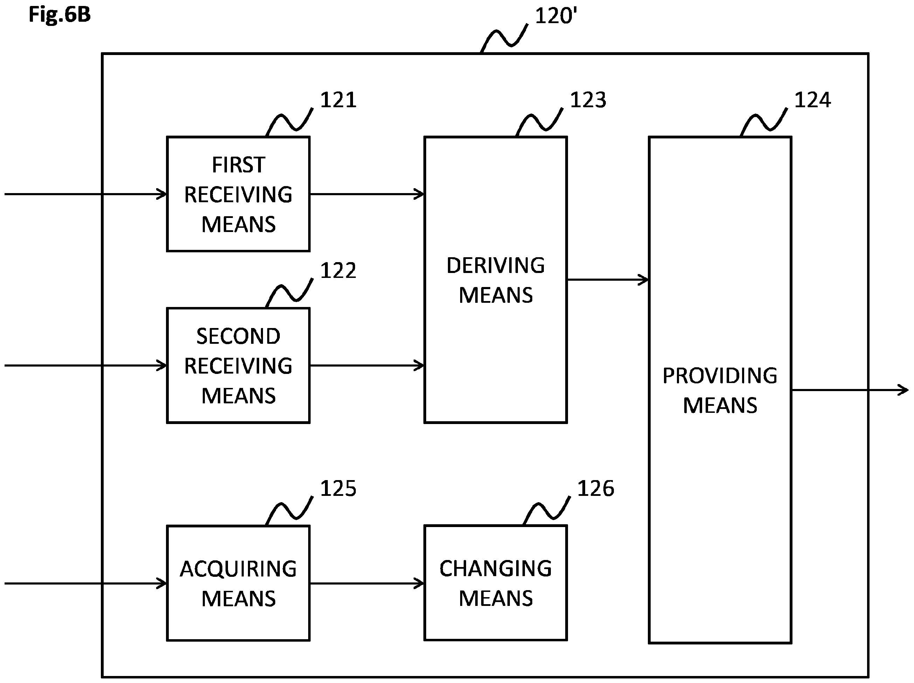

Figure 6B shows an example of a configuration of a processor unit 120', which is an alternative embodiment of the processor unit 120. The processor unit 120' has the same configuration as the configuration of the processor unit 120 except that the processor unit 120' includes acquiring means 125 and changing means 126. The processor unit 120' can change standards for deriving advice. The processor unit 120' can derive advice based on the changed standards. In Figure 6B, the same components as the components shown in Figure 6A are of the processor unit 120. The processor unit 120' has the same configuration as the configuration of the processor unit 120 except that the processor unit 120' includes acquiring means 125 and changing means 126. The processor unit 120' can change standards for deriving advice. The processor unit 120' can derive advice based on the changed standards. In Figure 6B, the same components as the components shown in Figure 6A are denoted by the same reference numerals and detailed explanation of the components is omitted here.

The processor unit 120' includes the first receiving means 121, the second receiving means 122, the deriving means 123, the providing means 124, the acquiring means 125, and the changing means 126.

The acquiring means 125 is configured to acquire a result of communication between two parties that has been performed. For example, the acquiring means 125 may acquire the result from the outside of the computer system 100 via the interface unit 110 or may acquire the result from the inside (for example, storage means) of the computer system 100. The result of the communication between the two parties that has been performed can be, for example, whether the computer system 100 provided advice during the communication and/or an evaluation of the communication.

The evaluation is an evaluation by the first party. The evaluation can be input to the terminal device 300 used by the first party via the input unit 320 (for example, the keyboard or the touch panel). The input information can be input from the terminal device 300 to the computer system 100 via the interface unit 110. For example, after the two-party communication with the second party, when the first party inputs the evaluation of the communication to an evaluation input screen (not shown), the input evaluation is input to the computer system 100 via the interface unit 110. The acquiring means 125 receives the evaluation from the interface unit 110.

The evaluation may be a two-grade evaluation for evaluating whether the first party is satisfied with the communication with the second party or may be a multi-grade evaluation indicating a degree of satisfaction with the communication with the second party.

The evaluation may be an evaluation by the second party. The evaluation can be input to the terminal device 300 used by the second party via the input unit 320 (for example, the keyboard or the touch panel). The input information can be input from the terminal device 300 to the computer system 100 via the interface unit 110. For example, after the two-party communication with the first party, when the second party inputs the evaluation of the communication to the evaluation input screen (not shown), the input evaluation is input to the computer system 100 via the interface unit 110. The acquiring means 125 receives the evaluation from the interface unit 110.

The changing means 126 is configured to change, based on a result of past communication between two parties acquired by the acquiring means 125, the standards based on which the deriving means 123 derives advice. The result of the past communication between the two parties can be, for example, whether the computer system 100 provided advice during the communication and/or an evaluation of the communication. For example, in the past communication between the two parties, when the computer system 100 provided advice but the evaluation of the communication was lower than an average, that is, when the advice by the computer system 100 is considered to be not effective, the changing means 126 can change the standards in order to change the advice derivation logic. Alternatively, for example, in the past communication between the two parties, when the computer system 100 did not provide advice, the changing means 126 can change the standards in order to change the advice derivation logic. This is based on an idea that the quality of the communication is further improved when the computer system 100 provides advice than when the computer system 100 does not provide advice.

For example, when the computer system 100 provided advice but evaluation of the communication was lower than an average, the changing means 126 may change the standards to be strengthened. Consequently, advice is less readily provided by the computer system 100. For example, the changing means 126 can strengthen the standards by raising at least one standard and/or adding a new standard. The new standard may be, for example, a standard correlated with another response and preferably can be a standard used in other communication having a high evaluation.

For example, when the computer system 100 did not provide advice, the changing means 126 can change the standards to be relaxed. Consequently, advice is readily provided by the computer system 100. For example, the changing means 126 can relax the standards by lowering at least one standard and/or removing at least one standard. For example, the changing means 126 compares standards used in past communication between two parties and audio and/or video acquired in the communication and specifies different parts. The changing means 126 can change the standards for the different parts. For example, the changing means 126 can remove the different parts from the standards. Alternatively, for example, the changing means 126 can relax the different parts.

Consequently, the deriving means 123 can derive advice using the changed standards.

By changing the standards based on the evaluation of the communication in the past as explained above, a logic for deriving advice is refined and the quality of advice derived by the deriving means 123 can be improved. Consequently, the quality of the communication between the two parties can be improved.

Note that the components of the computer system 100 explained above may be configured by a single hardware component or may be configured by a plurality of hardware components. When the components are configured by the plurality of hardware components, the form in which the hardware components are connected does not matter. The hardware components may be connected by radio or may be connected by wire. The computer system 100 of the present invention is not limited to a specific hardware configuration. The processor unit 120 being configured by an analog circuit rather than a digital circuit is also within the scope of the present invention. The configuration of the computer system 100 of the present invention is not limited to the configuration explained above as long as the functions of the computer system 100 can be implemented.

### 4. Processing by the computer system for supporting communication between two parties

Figure 7A is a flowchart showing an example of processing 700 by the computer system 100 for supporting communication between two parties. The processing 700 is executed in the processor unit 120 of the computer system 100.

In step S701, the first receiving means 121 of the processor unit 120 receives information indicating a response that the first party expects the second party to make in the communication between the two parties. The first receiving means 121 can receive information from the outside of the computer system 100, for example, via the interface unit 110.

In step S702, the second receiving means 122 of the processor unit 120 receives audio and/or video during the communication between the two parties. The second receiving means 122 can receive audio and/or video during the communication between the two parties from the outside of the computer system 100, for example, via the interface unit 110.

In step S703, the deriving means 123 of the processor unit 120 derives advice in the communication between the two parties based on the information received in step S701 and the audio and/or the video received in step S702. The deriving means 123 can derive, for example, among the advice stored in the database unit 200, advice correlated with both of the expected response indicated by the received information and the audio and/or the video. More specifically, when the audio and/or the video satisfies a standard correlated with the expected response indicated by the received information, the deriving means 123 can derive advice correlated with the response and the standard. For example, when the audio and/or the video does not satisfy the standard, the deriving means 123 can be prevented from deriving advice.

The deriving means 123 can derive advice, for example, according to processing explained below with reference to Figure 7B.

In step S704, the providing means 124 of the processor unit 120 provides the advice derived in step S703 during the communication between the two parties. The providing means 124 may provide advice to the first party, may provide advice to the second party, or may provide advice to both of the first party and the second party. For example, when the advice derived by the deriving means 123 is advice for the first party, the providing means 124 can provide the advice to the first party. For example, when the advice derived by the deriving means 123 is advice for the second party, the providing means 124 can provide the advice to the second party.

The providing means 124 can provide the advice via the interface unit 110. For example, the providing means 124 can transmit the advice to the terminal device 300 used by the first party via the interface unit 110 and display the advice on the display unit 330 of the terminal device 300. For example, as shown in Figure 1C, the advice is displayed on a video of the screen 30. For example, the providing means 124 can transmit the advice to the terminal device 300 used by the second party via the interface unit 110 and display the advice on the display unit 330 of the terminal device 300. For example, as shown in Figure 2, the advice is displayed on a video of the screen 40.

The first party and/or the second party can receive the advice during the communication between the two parties according to the processing 700 and can make efforts to be able to optimally interact with the other party in the communication between the two parties. Consequently, the quality of the communication can be improved.

Figure 7B is a flowchart showing an example of the processing by the deriving means 123 in step S703.

In step S7031, the deriving means 123 refers to a standard correlated with a response that the first party expects the second party to make indicated by the information received in step S701. For example, the standard is stored in the database unit 200 in correlation with a response and advice. For example, when the information received in step S701 indicates a plurality of responses, the deriving means 123 can refer to standards respectively correlated with the plurality of responses.

In step S7032, the deriving means 123 determines whether the audio and/or the video received in step S702 satisfies the standard referred to in step S7031. When determining that the audio and/or the video satisfies the standard, the deriving means 123 proceeds to step S7033. When determining that the audio and/or the video does not satisfy the standard, the deriving means 123 proceeds to step S7034.

The deriving means 123 can extract, for example, from the audio received by the second receiving means 122, characteristics of audio of the first party and/or characteristics of audio of the second party and compare the extracted characteristics of the audio with standards. In addition or as an alternative, the deriving means 123 can extract, for example, from the video received by the second receiving means 122, characteristics of a movement of the first party and/or characteristics of a movement of the second party and compared the extracted characteristics of the movement with standards.

For example, when a plurality of standards are correlated with one response as shown in Figure 4A, for each of the plurality of standards, the deriving means 123 determines whether the audio and/or the video received in step S702 satisfies the standard. For example, when a first standard of (1) a word "specifically" is absent, (2) pitch of audio of a word "yes" is equal to or lower than a threshold and pitch of audio of a word "understood" is equal to or lower than a threshold, and (3) a ratio of an utterance time of the first party and an utterance time of the second party is larger than 3:7 and a second standard of (1) words "first" and "next" are absent, (2) pitch of audio of the word "understood" is equal to or lower than the threshold and volume of audio of the word "understood" is equal to or lower than a threshold, and (3) the ratio of the utterance time of the first party and the utterance timer of the second party is larger than 3:7 are correlated, for each of the first standard and the second standard, it Is determined whether the standard is satisfied.

For example, when a standard is subdivided into a plurality of parts like the first standard and the second standard, the deriving means 123 may determine that the standard is satisfied and proceed to step S7033 when at least a part of the subdivided parts is satisfied or may determine that the standard is satisfied and proceeds to step S7033 when all of the subdivided part are satisfied. That is, referring to the first standard as an example, the deriving means 123 may determine that the standard is satisfied and proceed to step S7033 when at least a part of (1) to (3) is satisfied or may determine that the standard is satisfied and proceed to step S7033 when all of (1) to (3) are satisfied.

In step S7033, the deriving means 123 derives advice correlated with the standard determined as being satisfied. Specifically, the deriving means 123 derives advice stored in correlation with the standard in the database unit 200. When determining that a plurality of standards are satisfied, the deriving means 123 derives correlated advice for each of the plurality of standards.

In step S7034, the deriving means 123 determines not to derive advice. The processing can end here without proceeding to step S704.

The advice derived in step S7033 is provided in step S704.

Figure 8A is a flowchart showing an example of other processing 800 by the computer system 100 for supporting communication between two parties. The processing 800 is executed in the processor unit 120' of the computer system 100. The processing 800 is processing for changing a standard for the deriving means 123 to derive advice.

In step S801, the acquiring means 125 of the processor unit 120' acquires a result of communication between two parties that has been performed. The acquiring means 125 may receive the result from the outside of the computer system 100, for example, via the interface unit 110 or may acquire the result from the inside (for example, the storage means) of the computer system 100. The result of the communication between the two parties that has been performed can be, for example, whether the computer system 100 provided advice in the communication and/or evaluation for the communication. The evaluation may be an evaluation by the first party or may be an evaluation by the second party. Preferably, the evaluation can be the evaluation by the first party.

In step S802, the changing means 126 of the processor unit 120' changes, based on the result acquired in step S801, at least one standard for deriving advice.

The changing means 126 can change, for example, according to processing explained below with reference to Figure 8B, the standards for deriving advice.

According to the processing 800, the deriving means 123 can derive advice using the changed standards. By changing the standards based on the evaluation of the communication in the past as explained above, a logic for deriving advice is refined and the quality of advice derived by the deriving means 123 can be improved. Consequently, the quality of the communication between the two parties can be improved.

Figure 8B is a flowchart showing an example of the processing by the changing means 126 in step S802.

In step S8021, the changing means 126 determines, based on the result acquired in step S801, whether the computer system 100 provided advice in communication between two parties in the past. When determining that the computer system 100 provided advice in the communication between the two parties in the past, the changing means 126 proceeds to step S8022. When determining that the computer system 100 did not provide advice, the changing means 126 proceeds to step S8023.

In step S8022, the changing means 126 determines, based on the result acquired in step S801, whether evaluation for the communication between the two parties in the past is high (for example, the higher of two evaluations or higher than an average). When determining that the evaluation is low, the changing means 126 proceeds to step S8024. When determining that the evaluation is high, the changing means 126 proceeds to step S8025.

In step S8023, the changing means 126 changes standards to relax the standards. Consequently, advice is readily provided by the computer system 100. For example, the changing means 126 can relax the standards by lowering at least one standard and/or removing at least one standard. For example, the changing means 126 compares audio and/or video acquired in the communication in the past and standards used in the communication in the past and specifies different parts. The changing means 126 changes the standards for the different parts. For example, the changing means 126 can remove the different parts from the standards. Alternatively, for example, the changing means 126 can relax or strengthen the different parts.

In step S8024, the changing means 126 changes the standards to be strengthened. Consequently advice is less readily provided by the computer system 100. For example, the changing means 126 can strengthen the standards by raising at least one standard and/or adding a new standard. For example, the changing means 126 compares audio and/or video acquired in the communication in the past and standards used in the communication in the past and specifies parts having relatively small differences from the standards (that is, parts where the audio and/or the video acquired in the communication in the past narrowly satisfy the standards). The changing means 126 changes the standards for the parts having the relatively small differences from the standards. For example, the changing means 126 can raise the standards such that the audio and/or the video acquired in the communication in the past does not satisfy the standards.

In step S8025, the changing means 126 determines not to change the standards. This is because it can be determined that a logic used in the communication in the past is sufficient. Consequently, the changing means 126 can end the processing.

As explained above, the changing means 126 can change the standards for deriving advice.

The processing 800 is explained using a specific example.

It is assumed that, in a one-on-one meeting at a certain point in time, a derivation logic for advice "think together with the other party!" presented to a superior X is as described below.

When the following standards are satisfied, advice "think together with the other party!" is issued at "thirty minutes after the start".
- The following is included in words emitted from the superior X within thirty minutes after the start of the conversation.
   "What are you having trouble with?"
   "That is tough"
- Pitch, volume, speed, and the number of times of audio of a subordinate A satisfy the following by thirty minutes after the start of the conversation.
   "That is correct": 320 Hz or higher, 64 dB or higher, 0.21 seconds or less, 2.1 times or more
   "I see": 290 Hz or higher, 61 dB or higher, 0.35 seconds or less, 3.2 times or more
- A ratio of an utterance time of the subordinate A and an utterance time of the superior X by thirty minutes after the start
   Subordinate A 450, Superior X 550

In contrast, it is assumed that, since the standards described above were not satisfied during a dialogue in "thirty minutes after the start", the advice "think together with the other party!" was not provided from the computer system 100.

In step S801, the acquiring means 125 acquires a result of a one-on-one meeting.

In step S802, the changing means 126 changes the standards.

Since advice was not provided in the one-on-one meeting (No in S8021), in step S8023, the changing means 126 changes the standards to be relaxed.

The changing means 126 compares, for example, audio obtained in the one-on-one meeting and the standards. As a result of comparing the audio obtained in the one-on-one meeting and the standards, different parts described below were present.
∘ "That is tough" was not included in words emitted from the superior X within thirty minutes after the start of the conversation.
∘ Audio The "that is correct" voice of the subordinate A was 62 dB by thirty minutes after the start of the conversation .

The changing means 126 can change the standards as follows for the next and subsequent one-on-one meetings.
- The following is included in words emitted from the superior X within thirty minutes after the start of the conversation.
   "What are you having trouble with?"
- Pitch, volume, speed, and the number of times of audio of the subordinate A satisfy the following by thirty minutes after the start of the conversation
   "That is correct": 320 Hz or higher, 62 dB or higher, 0.21 seconds or less, 2.1 times or more
   "I see": 290 Hz or higher, 61 dB or higher, 0.35 seconds or less, 3.2 times or more
- A ratio of an utterance time of the subordinate A and an utterance time of the superior X by thirty minutes after the start
   Subordinate A 450, Superior X 550

By relaxing the standards as explained above, the computer system 100 can easily provide advice. For example, when the same communication as the communication in the one-on-one meeting is performed in the next and subsequent one-one-one meetings, the standards are satisfied and advice is provided.

As explained above, a logic for deriving advice is refined and advice can be more accurately provided in the next and subsequent one-on-one meetings.

The processing 800 is explained using another specific example.

It is assumed that, in a one-on-one meeting at a certain point in time, a derivation logic for advice "think together with the other party!" presented to the superior X is as follows.

When the following standards are satisfied, advice "think together with the other party!" is issued at "thirty minutes after the start".
- The following is included in words emitted from the superior X within thirty minutes after the start of the conversation.
   "What are you having trouble with?"
   "That is tough"
- Pitch, volume, speed, and the number of times of audio of the subordinate A satisfy the following by thirty minutes after the start of the conversation.
   "That is correct": 320 Hz or higher, 64 dB or higher, 0.21 seconds or less, 2.1 times or more
   "I see": 290 Hz or higher, 61 dB or higher, 0.35 seconds or less, 3.2 times or more
- A ratio of an utterance time of the subordinate A and an utterance time of the superior X by thirty minutes after the start
   Subordinate A 450, Superior X 550

In contrast, it is assumed that, since the standards described above were satisfied during a talk in "thirty minutes after the start", the advice "think together with the other party!" was provided from the computer system 100.

In step S801, the acquiring means 125 acquires a result of a one-on-one meeting.

A degree of satisfaction of the one-on-one meeting evaluated by the subordinate A was one of six stages and was greatly lower than an average of satisfaction degrees of one-on-one meetings in the past between the subordinate A and the superior X.

In step S802, the changing means 126 changes the standards.

Since advice is provided in the one-on-one meeting (Yes in S8021) and the evaluation is low (in S8022), in step S8024, the changing means 126 changes the standards to be strengthened.

The changing means 126 compares, for example, audio obtained in the one-on-one meeting and the standards. As a result of comparing the audio obtained in the one-on-one meeting and the standards, a part having the smallest difference from the standard described below were present.
∘ Audio The "that is correct" voice of the subordinate A was 325 Hz by thirty minutes after the start of the conversation.

The changing means 126 can change the standards as follows for the next and subsequent one-one-one meetings.
- The following is included in words emitted from the superior X within thirty minutes after the start of the conversation.
   "What are you having trouble with?"
   "That is tough"
- Pitch, volume, speed, and the number of times of audio of the subordinate A satisfy the following by thirty minutes after the start of the conversation
   "That is correct": 330 Hz or higher, 64 dB or higher, 0.21 seconds or less, 2.1 times or more
   "I see": 290 Hz or higher, 61 dB or higher, 0.35 seconds or less, 3.2 times or more
- A ratio of an utterance time of the subordinate A and an utterance time of the superior X by thirty minutes after the start
   Subordinate A 450, Superior X 550

By relaxing the standards as explained above, the computer system 100 less readily provides advice. For example, when the same communication as the communication in the one-on-one meeting is performed in the next and subsequent one-one-one meetings, the standards are not satisfied and advice is not provided.

By repeating the relaxation and the strengthening of the standards for providing advice as explained above, it is possible to derive optimum standards (that is, standards that can achieve a state in which advice is provided and evaluation for communication is high).

Note that, in the examples explained above, it is explained that the steps are performed in the specific order. However, order of performing the steps is not limited to the order explained above. The steps can be performed in logically possible any order.

In the examples explained above with reference to Figure 7A, Figure 7B, Figure 8A, and Figure 8B, it is explained that the kinds of processing in the steps shown in Figure 7A, Figure 7B, Figure 8A, and Figure 8B is implemented by the processor unit 120 or the processor unit 120' and the program stored in the memory unit 130. However, the present invention is not limited to this. At least one of the kinds of processing in the steps shown in Figure 7A, Figure 7B, Figure 8A, and Figure 8B may be implemented by a hardware component such as a control circuit.

In the examples explained above, it is explained that the computer system 100 is implemented as the server device. However, the present invention is not limited to this. The computer system 100 can also be implemented by any information terminal device (for example, the terminal device 300).

The present invention is not limited to the embodiments explained above. It is understood that the scope of the present invention should be interpreted by only the scope of the claims. It is understood from the description of the specific preferred embodiments of the present invention that those skilled in the art can implement an equivalent range based on the description of the present invention and the technical common sense.

### Industrial Applicability

The present invention is useful as an invention that provides a computer system, a method, and a program for supporting communication between two parties.

### Reference Signs List

- 100: COMPUTER SYSTEM
- 110: INTERFACE UNIT
- 120, 120': PROCESSOR UNIT
- 130: MEMORY UNIT

## Claims

1. A computer system for supporting communication between two parties, the computer system comprising:
first receiving means for receiving information indicating a response that a first party of the two parties expects a second party of the two parties to make in the communication;
second receiving means for receiving audio and/or video during the communication;
deriving means for deriving advice in the communication based on the information and the audio and/or the video; and
providing means for providing the derived advice during the communication.

2. The computer system according to claim 1, wherein, when the audio and/or the video satisfies at least one standard correlated with the expected response, the deriving means derives the advice correlated with the at least one standard.

3. The computer system according to claim 2, further comprising changing means for changing the at least one standard based on a result of the communication.

4. The computer system according to claim 3, wherein the changing means
(i) changes the at least one standard to relax the at least one standard when advice was not provided during the communication, and
(ii) changes the at least one standard to strengthen the at least one standard when advice was provided during the communication but evaluation for the communication was low.

5. The computer system according to any one of claims 1 to 4, wherein
the second receiving means receives at least the audio, and
the deriving means extracts characteristics of audio of the first party and/or the second party from the audio and derives the advice based on at least the input and the characteristics of the audio.

6. The computer system according to claim 5, wherein the characteristics of the audio of the first party include at least one of pitch of audio at a time when the first party uttered predetermined words, speed of the audio at the time when the first party uttered the predetermined words, volume of the audio at the time when the first party uttered the predetermined words, and a number of times the first party uttered the predetermined words.

7. The computer system according to claims 5 or 6, wherein characteristics of the audio of the second party include words uttered by the second party.

8. The computer system according to any one of claims 5 to 7, wherein characteristics of the audio of the first party and the second party include a ratio of an utterance time of the first party and an utterance time of the second party.

9. The computer system according to any one of claims 1 to 8, wherein
the second receiving means receives at least the video, and
the deriving means extracts characteristics of movements of the first party and/or the second party from the video and derives the advice based on at least the input and the characteristics of the movements.

10. The computer system according to claim 9, wherein the movements include at least one of a movement of a face, a movement of an arm, and a movement of a head.

11. The computer system according to claim 9, wherein the characteristics of the movements include at least one of size of nodding, speed of the nodding, a frequency of the nodding, wrinkles between eyebrows, and facial expression.

12. The computer system according to any one of claims 1 to 11, wherein the providing means displays the advice on a video displayed to the first party and/or the second party during the communication.

13. The computer system according to any one of claims 1 to 12, wherein
the advice is provided to the second party, and
the advice includes a matter that the second party should take into account in the communication.

14. The computer system according to any one of claims 1 to 13, wherein the first party is a member in an organization and the second party is a superior of the member.

15. A method for supporting communication between two parties, the method comprising:
receiving input indicating a response that a first party of the two parties expects a second party of the two parties to make in the communication;
receiving audio and/or video during the communication;
deriving advice in the communication based on the input and the audio and/or the video; and
providing the derived advice during the communication.

16. A program for supporting communication between two parties, the program being executed in a computer system comprising a processor unit, the program causing the processor unit to perform processing including:
receiving input indicating a response that a first party of the two parties expects a second party of the two parties to make in the communication;
receiving audio and/or video during the communication;
deriving advice in the communication based on the input and the audio and/or the video; and
providing the derived advice during the communication.

## Amended claims

### Amended claims under Art. 19.1 PCT

1. A computer system for supporting communication between two parties, the computer system comprising:
first receiving means for receiving information indicating a response that a first party of the two parties expects a second party of the two parties to make in the communication;
second receiving means for receiving audio and/or video during the communication;
deriving means for deriving advice in the communication based on the information and the audio and/or the video; and
providing means for providing the derived advice during the communication.

2. The computer system according to claim 1, wherein, when the audio and/or the video satisfies at least one standard correlated with the expected response, the deriving means derives the advice correlated with the at least one standard.

3. The computer system according to claim 2, further comprising changing means for changing the at least one standard based on a result of the communication.

4. The computer system according to claim 3, wherein the changing means
(i) changes the at least one standard to relax the at least one standard when advice was not provided during the communication, and
(ii) changes the at least one standard to strengthen the at least one standard when advice was provided during the communication but evaluation for the communication was low.

5. The computer system according to any one of claims 1 to 4, wherein
the second receiving means receives at least the audio, and
the deriving means extracts characteristics of audio of the first party and/or the second party from the audio and derives the advice based on at least the input and the characteristics of the audio.

6. The computer system according to claim 5, wherein the characteristics of the audio of the first party include at least one of pitch of audio at a time when the first party uttered predetermined words, speed of the audio at the time when the first party uttered the predetermined words, volume of the audio at the time when the first party uttered the predetermined words, and a number of times the first party uttered the predetermined words.

7. The computer system according to claims 5 or 6, wherein characteristics of the audio of the second party include words uttered by the second party.

8. The computer system according to any one of claims 5 to 7, wherein characteristics of the audio of the first party and the second party include a ratio of an utterance time of the first party and an utterance time of the second party.

9. The computer system according to any one of claims 1 to 8, wherein
the second receiving means receives at least the video, and
the deriving means extracts characteristics of movements of the first party and/or the second party from the video and derives the advice based on at least the input and the characteristics of the movements.

10. The computer system according to claim 9, wherein the movements include at least one of a movement of a face, a movement of an arm, and a movement of a head, or
wherein the characteristics of the movements include at least one of size of nodding, speed of the nodding, a frequency of the nodding, wrinkles between eyebrows, and facial expression.

11. The computer system according to any one of claims 1 to 10, wherein the providing means displays the advice on a video displayed to the first party and/or the second party during the communication.

12. The computer system according to any one of claims 1 to 12, wherein
the advice is provided to the second party, and
the advice includes a matter that the second party should take into account in the communication.

13. The computer system according to any one of claims 1 to 13, wherein the first party is a member in an organization and the second party is a superior of the member.

14. A method for supporting communication between two parties, the method comprising:
receiving input indicating a response that a first party of the two parties expects a second party of the two parties to make in the communication;
receiving audio and/or video during the communication;
deriving advice in the communication based on the input and the audio and/or the video; and
providing the derived advice during the communication.

15. A program for supporting communication between two parties, the program being executed in a computer system comprising a processor unit, the program causing the processor unit to perform processing including:
receiving input indicating a response that a first party of the two parties expects a second party of the two parties to make in the communication;
receiving audio and/or video during the communication;
deriving advice in the communication based on the input and the audio and/or the video; and
providing the derived advice during the communication.
